Europäisches Patentamt

European Patent Office

Office européen des brevets

(19)

(11) Numéro de publication : **0 063 974**
**B1**

# FASCICULE DE BREVET EUROPÉEN

(12)

(45) Date de publication du fascicule du brevet :
16.04.86

(21) Numéro de dépôt : 82400593.8

(22) Date de dépôt : 31.03.82

(51) Int. Cl.⁴ : **H 02 M   7/537**

(54) **Dispositif pour créer une source de tension alternative avec régulation pour une alimentation de puissance à partir d'une source de courant alternatif du réseau.**

(30) Priorité : 09.04.81 FR 8107141

(43) Date de publication de la demande :
03.11.82 Bulletin 82/44

(45) Mention de la délivrance du brevet :
16.04.86 Bulletin 86/16

(84) Etats contractants désignés :
AT BE CH DE FR GB IT LI LU NL SE

(56) Documents cités :
EP-A- 0 035 156
BE-A-   652 847
DE-A- 2 410 915
FR-A- 2 239 808
US-A- 3 618 130
US-A- 3 668 505
US-A- 3 889 173
US-A- 3 973 220

(73) Titulaire : **SEFLI-SOCIETE D'EQUIPEMENT ET DE FABRICATION POUR LA LUMINESCENCE ET L'INCANDESCENCE**
**Avenue de la Paix**
**F-91420 Morangis Cédex (FR)**

**Kneider, François**
**206 Boulevard Aristide Briand**
**F-93100 Montreuil (FR)**

(72) Inventeur : **Kneider, François**
**206, Boulevard A. Briand**
**F-93100 Montreuil (FR)**

(74) Mandataire : **Rinuy, Santarelli et al**
**14, avenue de la Grande Armée**
**F-75017 Paris (FR)**

## Description

La présente invention concerne un dispositif permettant à partir d'une source de courant alternatif du réseau de créer une source de tension continue avec régulation en vue d'une alimentation de puissance pour tubes à décharge sans renvoi de parasites vers la source de tension et sans perte appréciable de tension, ce dispositif comportant des moyens fournissant une tension sinusoïdale dans un circuit comprenant ladite source de tension continue, un interrupteur avec sa commande permettant de découper cette tension, au moins un circuit résonnant associé à au moins une impédance, cet interrupteur, ce circuit résonnant et cette impédance étant branchés en série aux bornes de ladite source de tension continue et au moins un élément de réaction branché sur la commande dudit interrupteur et sensible aux variations de fonctionnement apportées à l'utilisation de ce dispositif adapté pour intervenir sur au moins un moyen de régulation.

On sait que les transformateurs intervenant dans les alimentations de puissance sont des dispositifs lourds et coûteux.

On a donc imaginé de faire fonctionner ces derniers en hautes fréquences, ce qui entraîne une réduction des dimensions de leur circuit magnétique, donc également de leurs enroulements et permet de réaliser un gain important sur le poids et le prix de revient de ces appareils.

Dans ce but, on a réalisé des alimentations procédant au redressement et au filtrage d'une tension sinusoïdale, puis au découpage de cette tension redressée en utilisant un ou plusieurs transistors, soit en variation de phase, soit en variation de fréquence. De tels dispositifs présentent l'inconvénient de générer, au primaire du transformateur utilisé, un signal rectangulaire qui s'accompagne d'un courant de pointe élevé et d'une dissipation thermique importante lors de la commutation, de l'état passant à l'état bloqué du transistor de puissance, pouvant entraîner sa destruction.

En outre, sous un tel type de fonctionnement, le renvoi de parasites vers la source de tension est important.

De plus, avec ces dispositifs, il est nécessaire, pour leur utilisation, de redresser la tension alternative en la transformant en tension continue (voir par exemple les brevets des Etats-Unis d'Amérique N° 3 889 173 ; 3 618 130 ; 3 668 505).

Pour apporter une solution à ces problèmes, des systèmes existants procèdent au découpage sinusoïdal d'une tension continue (voir par exemple le brevet français N° 2 239 808). Toutefois ces systèmes imposent une tension continue d'entrée faible et constante ainsi que des variations de charge très réduites et ne donnent donc pas entière satisfaction, par suite de phénomènes d'échauffement en cas de surcharge, pouvant conduire à la mise hors service du circuit.

Afin de pallier ces inconvénients, l'invention vise un dispositif permettant à partir d'une source de courant alternatif du réseau de créer une source de tension continue avec régulation en vue d'une alimentation de puissance pour tubes à décharge sans renvoi de parasites vers la source de tension et sans perte appréciable de tension, ce dispositif comportant des moyens fournissant une tension sinusoïdale dans un circuit comprenant ladite source de tension continue, un interrupteur avec sa commande permettant de découper cette tension, au moins un circuit résonnant associé à au moins une impédance, cet interrupteur, ce circuit résonnant et cette impédance étant branchés en série aux bornes de ladite source de tension continue et au moins un élément de réaction branché sur la commande dudit interrupteur et sensible aux variations de fonctionnement apportées à l'utilisation de ce dispositif adapté pour intervenir sur au moins un moyen de régulation, ce dispositif étant caractérisé en ce que, pour réguler et stabiliser la décharge et absorber les phénomènes dus à des surcharges brutales ou à des courts-circuits, ledit circuit alimente une charge branchée en série avec au moins une self, elle-même montée en série avec au moins un bobinage dudit circuit.

Suivant d'autres caractéristiques :

ledit interrupteur est constitué par la combinaison d'un transistor shunté par une diode, d'une capacité et d'une résistance ;

la commande dudit transistor est constituée d'au moins deux circuits branchés en dérivation entre les bornes dudit transistor, l'un de ces circuits comportant une capacité et un enroulement en série ;

ledit élément sensible est constitué par une source délivrant une tension variable de référence adaptée pour l'alimentation dudit circuit relié aux bornes ;

ladite source est constituée par un bobinage disposé autour du circuit magnétique d'un transformateur inclus dans le circuit électrique délivrant ladite tension qui est redressée et filtrée par des moyens appropriés ;

ledit interrupteur est formé soit de deux transistors disposés suivant un montage « push-pull » en série ou en parallèle, soit d'un transistor MOS, soit d'un thyristor à blocage contrôlé.

Le dispositif suivant l'invention trouve de nombreuses applications et notamment dans le cadre des alimentations comportant un transformateur pour tube à cathode froide, ceci afin de disposer, entre les bornes de sortie de l'alimentation, d'un niveau de tension en rapport avec l'utilisation souhaitée. Dans ce cas, suivant les variations de régime aux bornes des enroulements du transformateur, dues à une modification de la tension alternative redressée ou à une variation même importante de charge, la fermeture de l'interrupteur est déclenchée de façon telle que ces écarts de régime sont rétablis et leurs effets considérablement amoindris.

La réalisation du dispositif de l'invention est simple, sa sécurité de fonctionnement remarquable. Ainsi, la nécessité de surdimensionner les composants d'une alimentation utilisant ce dispositif disparaît, ce qui diminue encore, de façon appréciable, le prix de revient.

D'autres caractéristiques et avantages de l'invention ressortiront de la description détaillée qui va suivre et des dessins présentés en annexe qui concernent un exemple non limitatif d'application de ce dispositif dans le cadre des alimentations de puissance.

La figure 1 présente le schéma électrique d'une alimentation mettant en œuvre l'invention.

Les figures 2A et 2B indiquent les variations de l'intensité i et de la tension u en fonction du temps pour deux instants d'amorçage différents du transistor.

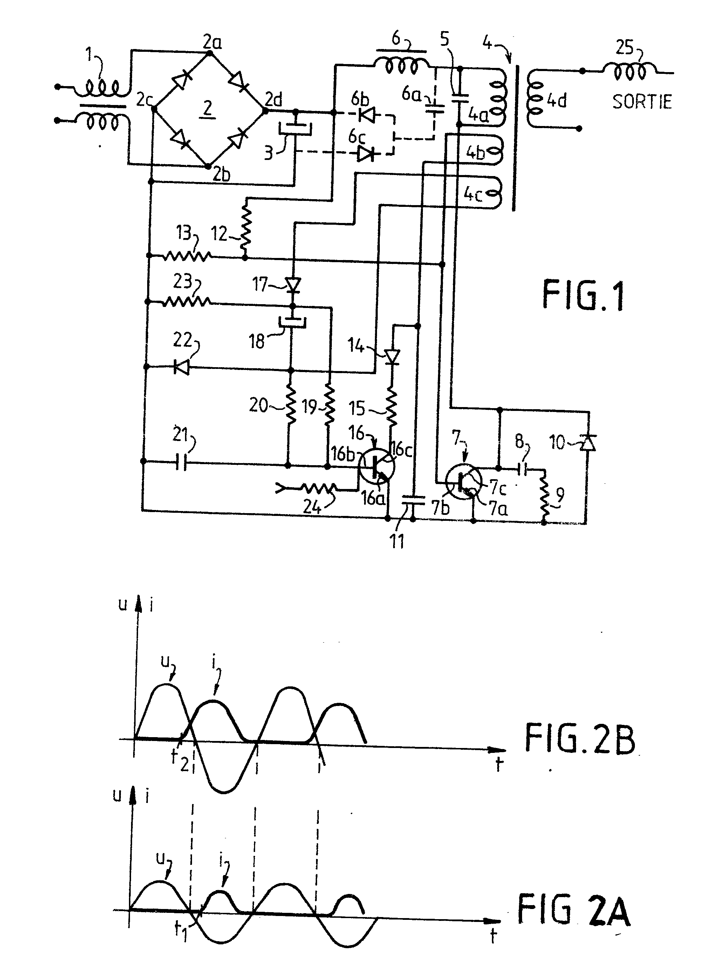

Le dispositif représenté en figure 1 comprend une source d'alimentation alternative délivrant une moyenne tension de type classique appliquée entre les bornes 2a, 2b d'un pont redresseur à diodes 2 formant source de tension continue, une capacité de filtrage 3 en parallèle sur des bornes de sorties 2c, 2d du pont redresseur, une impédance 1 permettant de limiter le courant de pointe dans le pont redresseur.

Entre ces mêmes bornes sont branchés, en série, un enroulement 4a d'un transformateur 4 (dit enroulement primaire), shunté par une capacité de résonance 5, une self 6 à forte impédance, un transistor de puissance 7.

En dérivation sur le collecteur 7c et l'émetteur 7a de ce transistor, se trouvent deux circuits comprenant l'un, une capacité 8 en série avec une résistance 9, l'autre, une diode 10.

Entre la base 7b et l'émetteur 7a du transistor 7, sont branchés en parallèle trois circuits constitués, respectivement, d'un enroulement 4b du transformateur (dit enroulement de réaction) en série avec une capacité de découplage 11, en série avec la source de tension continue d'une résistance 12 déchargeant la capacité 3 lors de la mise hors service du dispositif, d'une résistance 13 limitant partiellement le potentiel négatif de la base du transistor 7.

La capacité 11 est shuntée par un ensemble série formé d'une diode 14, d'une résistance 15 de protection, d'un transistor 16. Ce dernier peut être remplacé par une diode du type Zener.

Une diode 17 redresse la tension fournie par un enroulement 4c du transformateur, que filtre une capacité 18. Ainsi redressée et filtrée, cette tension alimente un pont diviseur constitué de résistances 19, 20, et relié à la base 16b du transistor 16, de même que la capacité d'intégration 21.

La diode du type Zener 22 est alimentée par la résistance 23 ; elle stabilise une tension de référence et détermine le seuil de conduction du transistor 16.

La résistance 24 est placée en série avec une autre source possible (non représentée) d'alimentation de la base 16b du transistor 16.

En série avec l'enroulement 4d du transformateur (dit enroulement secondaire) constituant la sortie du dispositif est connectée une self 25 d'adaptation de charge.

Utilisé en commutation, le transistor 7 découpe la tension fournie par le pont redresseur 2, en se trouvant simultanément à l'état passant (état de saturation) puis à l'état bloqué.

Du fait de la présence de la self 6 et de la capacité 5 agissant en combinaison avec l'impédance propre du bobinage 4a, le courant traversant cet élément croît jusqu'à un certain seuil et diminue pour atteindre une valeur nulle lorsque l'émetteur du transistor 7 se trouve à un potentiel plus négatif que celui de son collecteur. Le transistor atteint l'état bloqué et la diode 10, branchée entre le collecteur 7c et l'émetteur 7a, évite l'inversion de polarité de la tension collecteur-émetteur.

Bien qu'un tel mode de commutation limite les impulsions de tension, lors du passage de l'état passant à l'état bloqué du transistor, la résistance 9, en série avec la capacité 8, renforce la protection de cet élément. Dans le cas de surtensions importantes, l'énergie, plutôt que d'être dissipée dans la résistance 9, peut être réinjectée dans le circuit principal par des moyens connus en soi, comme par exemple un montage comprenant une capacité 6a, deux diodes 6b, 6c disposées comme indiqué en traits interrompus sur la figure 1.

L'amorçage du transistor de puissance 7, pour sa conduction lors de l'alternance suivante, dépend des valeurs de sa tension base-émetteur et de son courant de base.

On peut alors contrôler l'instant d'amorçage du transistor, en l'appropriant à la puissance à transiter, en agissant sur ces paramètres.

Le circuit composé des éléments 14, 15, 16 réalise cette opération en déphasant la conduction du transistor 7.

Si ce circuit est fermé, condition réalisée quand le transistor 16 est à l'état passant, il dérive une partie de l'énergie destinée à la polarisation de la base du transistor 7 ; la conduction de ce dernier est retardée, la valeur efficace du courant traversant son collecteur est réduite (voir figure 2A).

Si ce circuit est ouvert (transistor 16 à l'état bloqué), il n'apporte aucune modification à la conduction du transistor 7 ; celui-ci transite au niveau de son collecteur une intensité maximale (voir figure 2B).

Dans ce circuit, le transistor 16 fonctionnant également en commutation joue le rôle d'interrupteur. Sa commande est réalisée à partir de l'enroulement 4c du transformateur, lequel délivre une tension dite de référence. Après être redressée par la diode 17 et filtrée par la capacité 18, cette tension alimente le pont diviseur formé par les résistances 19, 20, servant à polariser la base du transistor 16.

Dès lors, et par réaction en chaîne, dès qu'une variation dans le fonctionnement du dispositif est enregistrée par l'enroulement 4c, l'interrupteur réalisé par le transistor 16 agit de façon telle que l'instant d'amorçage du transistor 7 est déplacé de telle sorte que le fonctionnement normal est retrouvé.

L'ensemble 14, 15, 16 en combinaison avec l'enroulement 4c constitue le système de régulation du dispositif.

Si l'on désire une régulation plus efficace, l'émetteur du transistor 16 sera relié à une tension plus négative de quelques volts que l'émetteur du transistor 7.

D'autre part, le transistor 16 peut être remplacé par plusieurs transistors ou circuits intégrés du genre ampli opérationnel.

Il est à noter que les valeurs de la self 6, de la capacité 5 et la nature de la charge déterminent la fréquence de fonctionnement du dispositif (voisine par exemple de 15 KHz suivant une forme courante de réalisation, elle peut atteindre 40 KHz ou plus).

La tension de référence délivrée par l'enroulement 4c du transformateur peut dans une autre forme de réalisation être prise aux bornes d'un élément disposé au secondaire du transformateur ou provenir d'une source extérieure au dispositif, dont le courant est limité par la résistance 24.

Grâce à son système de régulation, le dispositif permet de transiter des puissances relativement importantes en rapport avec son dimensionnement raisonnable. En outre, le dispositif de l'invention fonctionne sans renvoi de parasites vers la source de tension.

Il va sans dire que ce dispositif peut avoir un large champ d'applications et peut être appliqué à des alimentations se substituant d'une façon avantageuse aux alimentations à découpage classique, de même qu'aux simples transformateurs.

De telles alimentations assurent par exemple la fourniture d'énergie électrique à des dispositifs tels que chargeur de batterie, tubes à décharge, postes à soudure, téléviseurs, amplificateurs de puissances, projecteurs de films et de diapositives, appareils à tension et à courants constants, alimentations de lampes fluorescentes, appareils basse tension avec séparation galvanique et alimentations des moteurs conçus pour fonctionner à ces fréquences ; et ce dans les meilleures conditions de sécurité et de rentabilité du fait de leur système de régulation incorporé et de leur fonctionnement sous hautes fréquences.

C'est ainsi que, dans le cas particulier des tubes à décharge à cathode froide, le tube à décharge sera branché sur le secondaire du transformateur 4d en ayant une self 25 en série, ou bien la self 25 peut être remplacée par une fuite magnétique entre le primaire et le secondaire ; de ce fait, on pourra court-circuiter ou surcharger le secondaire sans qu'il y ait une incidence sur le bon fonctionnement du système. Dans cette application et grâce au dispositif de l'invention, les parasites propres à la décharge dans le tube seront rendus négligeables.

## Revendications

1. Dispositif permettant à partir d'une source de courant alternatif du réseau de créer une source de tension continue avec régulation en vue d'une alimentation de puissance pour tubes à décharge sans renvoi de parasites vers la source de tension et sans perte appréciable de tension, ce dispositif comportant des moyens fournissant une tension sinusoïdale dans un circuit comprenant ladite source de tension continue (2, 2c, 2d), un interrupteur (7) avec sa commande (7, 7b) permettant de découper cette tension, au moins un circuit résonnant (bobinage 4a — capacité 5) associé à au moins une impédance (bobinage 6), cet interrupteur (7), ce circuit résonnant (4a, 5) et cette impédance (6) étant branchés en série aux bornes de ladite source de tension continue et au moins un élément de réaction (bobinage 4b) branché sur la commande (7b) dudit interrupteur (7) et sensible aux variations de fonctionnement apportées à l'utilisation de ce dispositif adapté pour intervenir sur au moins un moyen de régulation (14, 15, 16), dispositif caractérisé en ce que, pour réguler et stabiliser la décharge et absorber les phénomènes dus à des surcharges brutales ou à des courts-circuits, ledit circuit alimente une charge branchée en série avec au moins une self (25), elle-même montée en série avec au moins un bobinage (4a ou 4d) dudit circuit.

2. Dispositif selon la revendication 1, caractérisé en ce que ledit interrupteur est constitué par la combinaison d'un transistor (7) shunté par une diode (10), d'une capacité (8) et d'une résistance (9).

3. Dispositif selon la revendication 1 ou 2, caractérisé en ce que la commande du transistor (7) est constitué d'au moins deux circuits branchés en dérivation entre les bornes (7a, 7b) dudit transistor, l'un de ces circuits comportant une capacité (11) et un enroulement (4b) en série.

4. Dispositif selon la revendication 1, caractérisé en ce que ledit élément sensible est constitué par une source délivrant une tension variable de référence adaptée pour l'alimentation dudit circuit relié aux bornes (16a, 16b).

5. Dispositif selon les revendications 1 et 4, caractérisé en ce que ladite source est constituée par un bobinage (4c) disposé autour du circuit magnétique d'un transformateur (4) inclus dans le circuit électrique délivrant ladite tension qui est redressée et filtrée par des moyens appropriés (17, 18).

6. Dispositif selon l'une des revendications 1 ou 2, caractérisé en ce que ledit interrupteur (7) est formé soit de deux transistors disposés suivant un montage « push-pull » série ou parallèle, soit d'un transistor MOS, soit d'un thyristor à blocage contrôlé.

## Claims

1. A device for producing from an alternative current network source a direct current voltage source with regulation to provide a power supply for discharge tubes without returning spurious signals to the voltage source and without significant voltage loss, such device comprising means for providing a sinusoidal voltage in a circuit comprising said direct current voltage source (2, 2c, 2d), a switch (7) with its control (7, 7b) for chopping such voltage, at least one resonating circuit (winding 4a — capacitor 5) associated with at least one impedance (winding 6), such switch (7), such resonating circuit (4a, 5) and such impedance (6) being connected in series to the terminals of said direct current voltage source and at least one reactive element (winding 4b) connected to the control (7b) of switch (7) and responsive to the operational variations caused by the use of such device adapted to interfere on at least one regulation means (14, 15, 16), the device being characterized in that, in order to regulate and stabilize the discharge and absorb phenomena resulting from brutal overloads or short-circuits, said circuit feeds a load connected in series with at least one self-inductance (25), itself connected in series with at least one winding (4a or 4d) of said circuit.

2. A device according to Claim 1, characterized in that said switch consists of the combination of a transistor (7) shunted by a diode (10), a capacitor (8) and a resistor (9).

3. A device according to Claim 1 or 2, characterized in that the control of the transistor (7) is constituted by at least two circuits connected in parallel between the terminals (7a, 7b) of said transistor, one of these circuits comprising a capacitor (11) and a winding (4b) in series.

4. A device according to Claim 1, characterized in that said responsive element consists of a voltage source supplying a variable voltage of a frequency adapted to feed said circuit connected to the terminals (16a, 16b).

5. A device according to Claims 1 and 4, characterized in that said source consists of a winding (4c) disposed about the magnetic circuit of a transformer (4) included in the electric circuit supplying said voltage, which is rectified and filtered by suitable means (17, 18).

6. A device according to one of Claims 1 or 2, characterized in that said switch (7) is formed either from two transistors disposed in a series or parallel push-pull circuit or as an MOS transistor or a controlled blocking thyristor.

## Patentansprüche

1. Anordnung, die ausgehend von einer Netz-Wechselspannungsquelle die Schaffung einer geregelten Gleichspannungsquelle erlaubt für eine Leistungsversorgung für Entladungsröhren, ohne Entstehung von Störspannungen zu der Spannungsquelle hin und ohne spürbaren Spannungsverlust, wobei die Anordnung Mittel enthält, welche eine Sinusspannung in eine Schaltung liefern, welche die Gleichspannungsquelle (2, 2c, 2d) umfaßt, einen Schalter (7) mit seiner Steuerung (7, 7b), der das Abschneiden der Spannung erlaubt, mindestens einen Resonanzkreis (Spule 4a — Kondensator 5), mindestens einer Impedanz (Spule 6) zugeordnet, wobei der Schalter (7), der Resonanzkreis (4a, 5) und die Impedanz (6) in Reihe an Klemmen der Gleichspannungsquelle angeschlossen sind, und mindestens ein Reaktionselement (Spule 4b), das mit der Steuerung (7b) des Schalters (7) verbunden ist und auf Funktionsänderungen, die beim Gebrauch der Vorrichtung auftreten, reagiert, ausgelegt zum Eingreifen in mindestens ein Regelmittel (14, 15, 16), wobei die Anordnung dadurch gekennzeichnet ist, daß zum Regeln und Stabilisieren der Entladung und zum Aufnehmen der Erscheinungen, die von kräftigen Überlastungen oder von Kurzschlüssen herrühren, die Schaltung eine in Reihe mit mindestens einer Selbstinduktion (25) angeschlossene Last speist, welche wiederum in Reihe mit mindestens einer Spule (4a oder 4b) der Schaltung angeordnet ist.

2. Anordnung nach Anspruch 1, dadurch gekennzeichnet, daß der Schalter gebildet ist durch die Kombination aus einem Transistor (7) mit einer Parallelschaltung einer Diode (10), eines Kondensators (8) und eines Widerstandes (9).

3. Anordnung nach Anspruch 1 oder 2, dadurch gekennzeichnet, daß die Steuerung des Transistors (7) gebildet ist durch mindestens zwei Kreise, welche im Nebenschluß zwischen den Anschlüssen (7a, 7b) des Transistors angeschlossen sind, wobei der eine der Kreise einen Kondensator (11) und eine Wicklung (4b) in Reihe aufweist.

4. Anordnung nach Anspruch 1, dadurch gekennzeichnet, daß das reagierende Element gebildet ist durch eine eine variable Referenzspannung liefernde Quelle, ausgelegt zur Speisung der Schaltung, die an Klemmen (16a, 16b) angeschlossen ist.

5. Anordnung nach den Ansprüchen 1 und 4, dadurch gekennzeichnet, daß die Quelle gebildet ist durch eine Spule (4c), welche um den Magnetkreis eines Transformators (4) angeordnet ist, der in der elektrischen Schaltung eingeschlossen ist, welche die Spannung liefert, die durch zugeordnete Mittel (17, 18) gerichtet und gefiltert wird.

6. Anordnung nach einem der Ansprüche 1 oder 2, dadurch gekennzeichnet, daß der Schalter (7) gebildet ist durch zwei in « Gegentakt- » Anordnung in Reihe oder parallel angeordnete Transistoren, oder einen MOS-Transistor, oder einen Thyristor mit gesteuerter Sperrung.

FIG.1

FIG.2B

FIG 2A